# EUROPÄISCHE PATENTANMELDUNG

(11) **EP 4 603 152 A1**
(43) Veröffentlichungstag der Anmeldung: **20.08.2025**
(21) Anmeldenummer: 25153465.7
(22) Anmeldetag: 23.01.2025
(51) Int. Cl.: A62C 2/06

(54) **SANITÄREINRICHTUNG MIT EINEM BRANDSCHUTZELEMENT UND BRANDSCHUTZ-SET FÜR EINE SANITÄREINRICHTUNG**

(30) Priorität: 15.02.2024 DE 102024104202
(71) Anmelder: Viega Technology GmbH & Co. KG, 57439 Attendorn (DE)
(72) Erfinder: Büdenbender, Ludger, 57489 Drolshagen (DE)
(74) Vertreter: Cohausz & Florack

(57) **Zusammenfassung**

Beschrieben wird eine Sanitäreinrichtung mit einem plattenförmigen Brandschutzelement (24), welche Sanitäreinrichtung ein Montagegestell für einen Sanitärkörper und eine vor dem Montagegestell anzuordnende Wand mit wenigstens einer mit dem Brandschutzelement (24) zu verschließenden Öffnung aufweist, wobei das Brandschutzelement mit wenigstens einem Brandschutzmittel (31, 32, 34) versehen ist, das im Brandfall expandiert. Damit eine solche Sanitäreinrichtung bereits bei einer eine Mindestwanddicke von 40 mm aufweisenden Schachtwand aus Gipskarton die brandschutztechnischen Anforderungen gemäß Feuerwiderstandsklasse F90 erfüllt und dies vergleichsweise kostengünstig ermöglicht, sieht die Erfindung vor, dass das Brandschutzelement (24) aus einer aus Gipsgussmasse in Form gegossenen Brandschutzplatte (24.1) gebildet ist, wobei die Brandschutzplatte (24.1) wenigstens eine Durchgangsöffnung (27, 28, 29) aufweist, deren Öffnungswandung zumindest teilweise aus dem im Brandfall expandierenden Brandschutzmittel (31) gebildet ist. Insbesondere wird eine Brandschutz-Set beschrieben, umfassend ein Brandschutzelement (24), das aus einer aus Gipsgussmasse in Form gegossenen Brandschutzplatte (24.1) gebildet ist, wobei die Brandschutzplatte wenigstens eine Durchgangsöffnung (27, 28, 29) aufweist, deren Öffnungswandung zumindest teilweise aus dem im Brandfall expandierenden Brandschutzmittel (31) gebildet ist, und bandförmige Brandschutzmittel (36, 36') aus intumeszierendem Material, die zum Umwickeln eines Spülwasserrohrstutzens und eines Ablaufrohrstutzens bestimmt sind.

## Beschreibung

Die Erfindung betrifft eine Sanitäreinrichtung mit einem plattenförmigen Brandschutzelement, welche Sanitäreinrichtung ein Montagegestell für einen Sanitärkörper und eine vor dem Montagegestell anzuordnende Wand mit wenigstens einer mit dem Brandschutzelement zu verschließenden Öffnung aufweist, wobei das Brandschutzelement mit wenigstens einem Brandschutzmittel versehen ist, das im Brandfall expandiert.

Des Weiteren betrifft die Erfindung ein Brandschutz-Set für eine solche Sanitäreinrichtung mit einem Brandschutzelement zum Verschließen einer Öffnung einer vor dem Montagegestell anzuordnenden Wand.

Im Gebäudebrandschutz werden zwei Typen von Schächten, die der Aufnahme von Elektro- und/oder Rohrleitungen, insbesondere Trinkwasser- und Abwasserleitungen dienen, unterschieden, nämlich einerseits durchgängige Schächte, deren Schachtwände und Durchdringungen durch die Schachtwände die Anforderungen an brandabschnittsbildende Konstruktionen erfüllen (Schachttyp A), und andererseits die in den Ebenen der Geschoßdecken abgeschlossenen und somit nicht durchgängigen Schächte, bei denen Abschottungen in den Ebenen der Geschoßdecken in der gleichen Qualität wie die jeweilige Geschoßdecke selbst ausgeführt werden (Schachttyp B). In beiden Fällen müssen die dabei brandschutztechnisch relevanten Durchbrüche bzw. Durchgangsöffnungen mit geeigneten Feuerschutzabschlüssen verschlossen werden, um die geforderten Brandschutzziele zu erzielen.

In einigen Ländern ist für den Schachttyp A im Gebäude die Feuerwiderstandsklasse F90 gefordert. Die Feuerwiderstandsklasse F90 bedeutet, dass betreffende Bauteile oder Konstruktionen, z.B. Wände, Decken, Stützen, Unterzüge und Treppen, im Brandfall mindestens 90 Minuten ihre Funktion erfüllen. Die Bauteile oder Konstruktionen gelten dann als feuerbeständig.

Ein vertikaler Schacht des Typs A durch ein Gebäude wird bzw. ist über die gesamte Höhe mit Trennwänden in Trockenbauweise ausgeführt. Hierzu kommen Blechprofile mit einer Beplankung aus Gipskartonplatten zum Einsatz. Die Wanddicken der aus mehreren Lagen von Gipskartonplatten hergestellten Schacht- bzw. Trennwände betragen dabei üblicherweise ca. 40, 45 oder 50 mm. Die Durchdringungen der Trennwände für sanitäre Versorgungs- und Entsorgungsleitungen müssen im Brandfall wirksam gegen Feuer, Rauch und Gas für eine Dauer von wenigstens 90 Minuten verschlossen bleiben.

Häufig wird in eine Trennwand eines Installationsschachts des Typs A ein Montagegestell für einen Sanitärkörper, z.B. einen wandhängenden WC-Körper integriert. Die vor dem Montagegestell anzuordnende Wand (Trennwand) weist dabei eine Öffnung auf, an der eine Betätigungsplatte zur Betätigung des Ablaufventils des hinter der Wand angeordneten Einbau-Spülkastens montiert wird. Diese Öffnung wird auch als Revisions- oder Inspektionsöffnung bezeichnet. Zudem werden eine einzelne Öffnung oder zwei Öffnungen zur Durchführung eines Spülwasserzulaufrohrs und eines Ablaufrohrs in die vor dem Montagegestell anzuordnende Wand (Trennwand) eingebracht. Diese Öffnungen müssen im Brandfall wirksam gegen Feuer, Rauch und Gas für eine Dauer von wenigstens 90 Minuten verschlossen bleiben. Hierzu ist es bekannt, die zu verschließenden Öffnungen mit Brandschutzelementen auszustatten, wobei das jeweilige Brandschutzelement mit wenigstens einem Brandschutzmittel versehen ist, das im Brandfall expandiert.

Im Stand der Technik sind Brandschutzelemente bekannt, die als Lösungen für die vorstehend beschriebenen brandschutztechnischen Anforderungen gelten.

Die EP 2 105 544 B1 beschreibt eine Sanitäreinrichtung der eingangs genannten Art mit einem Brandschutzelement, das ein Gehäuse aufweist, in welchem plattenförmige Brandschutzmittel angeordnet sind, die im Brandfall expandieren. Das Brandschutzelement ist mit Befestigungsmitteln aus Blech in Form von Rastteilen und Einhängeteilen versehen, mit denen es am Montagegestell in einem ersten Montageschritt eingehängt und dann mit einer Bewegung am Montagegestell verrastbar ist. Die plattenförmigen Brandschutzmittel aus im Brandfall expandierendem Material sind sandwichartig aneinandergelegt und zwischen zwei Blechplatten angeordnet. Des Weiteren besitzt das Brandschutzelement einen Kragen, auf den ein Rahmen aus einem Brandschutzmaterial, insbesondere intumeszierendem Material aufgesetzt ist. Das Brandschutzelement ist zum Verschließen der Revisionsöffnung für einen Spülkasten vorgesehen und weist Durchbrüche für eine Drückerstange und Befestigungsteile auf, wobei diese Durchbrüche im Brandfall durch das dann expandierende Brandschutzmaterial verschlossen werden. Dieses bekannte Brandschutzelement ist jedoch im Aufbau und hinsichtlich seiner Herstellung sehr aufwendig ausgeführt.

Die DE 20 2015 103 302 U1 beschreibt eine brandgeschützte WC-Sanitäranordnung mit einem Montagegestell zum wandseitigen Anschluss eines WC-Körpers und einer vor dem Montagegestell angeordneten Wand. Zum Anschluss des WC-Körpers hat die Wand eine Durchgangsöffnung zur Durchführung eines Spülwasserrohrs, eine Durchgangsöffnung zur Durchführung eines Abwasserrohrs, eine Durchgangsöffnung als Revisionsöffnung zur Aufnahme einer Betätigungsplatte bzw. Betätigungsmechanik für einen hinter der Wand im Wandhohlraum angeordneten Unterputzspülkasten und mindestens ein primäres Brandschutzelement, welches zum Verschließen mindestens einer der Durchgangsöffnungen ausgebildet ist. Die Wand weist dabei mindestens eine Gipskartonplatte auf, wobei auf der Rückseite der Wand um die mindestens eine Durchgangsöffnung herum mindestens ein sekundäres Brandschutzelement in Form einer eine Zentralöffnung aufweisenden Brandschutzplatte aus Steinwolle angeordnet ist, die einen Randbereich der Durchgangsöffnung der Wand gegen Wärmeeinwirkung dämmt. Bei dem primären Brandschutzelement handelt es sich insbesondere um ein Brandschutzelement zum Einsatz in die Revisionsöffnung. In diesem Fall ist das primäre Brandschutzelement kastenförmig ausgebildet und weist Durchgangsöffnungen für Betätigungsstangen zum Betätigen eines im Spülkasten angeordneten Ablaufventils auf. Zum Verschließen der den Betätigungsstangen zugeordneten Durchgangsöffnungen im Brandfall weist das kastenförmig, primäre Brandschutzelement intumeszierendes Material auf. Auch diese bekannte Brandschutzlösung ist jedoch insbesondere hinsichtlich der Materialkosten unnötig aufwendig ausgeführt.

Davon ausgehend liegt der vorliegenden Erfindung die Aufgabe zugrunde, eine Sanitäreinrichtung mit einem plattenförmigen Brandschutzelement der eingangs genannten Art zu schaffen, die bereits bei einer eine Mindestwanddicke von 40 mm aufweisenden Schachtwand aus Gipskarton (Gipskartonfeuerschutzplatten) die brandschutztechnischen Anforderungen gemäß Feuerwiderstandsklasse F90 erfüllt und sich durch ein vergleichsweise kostengünstiges Brandschutzelement bzw. Brandschutz-Set auszeichnet. Des Weiteren soll das Brandschutzelement bzw. ein das Brandschutzelement umfassendes Brandschutz-Set in einer universellen Ausführung einen zuverlässigen Verschluss einer Durchgangsöffnung in einer Schachtwand mit einer üblichen Schachtwanddicke von 40 mm, 45 mm und/oder 50 mm gemäß Feuerwiderstandsklasse F90 ermöglichen. Des Weiteren soll das Brandschutzelement bzw. ein das Brandschutzelement umfassendes Brandschutz-Set mit einfachen Betätigungsplatten aus Kunststoff aber auch mit hochwertigen Betätigungsplatten aus Metall, insbesondere solchen mit elektronischen Komponenten, kombinierbar sein.

Diese Aufgabe bzw. Aufgaben werden durch eine Sanitäreinrichtung mit den in Anspruch 1 angegebenen Merkmalen gelöst. Vorteilhafte Ausgestaltungen der erfindungsgemäßen Sanitäreinrichtung bzw. des erfindungsgemäßen Brandschutzelements sowie eines das erfindungsgemäße Brandschutzelement umfassenden Brandschutz-Sets sind in den Unteransprüchen angegeben.

Die Erfindung ist dadurch gekennzeichnet, dass das Brandschutzelement aus einer aus Gipsgussmasse in Form gegossenen Brandschutzplatte gebildet ist, wobei die Brandschutzplatte wenigstens eine Durchgangsöffnung aufweist, deren Öffnungswandung zumindest teilweise aus einem im Brandfall expandierenden Brandschutzmittel gebildet ist.

Die wenigstens eine Durchgangsöffnung der erfindungsgemäßen Brandschutzplatte ist vorzugsweise nicht gebohrt oder nachträglich in die Platte eingebracht, sondern wird vorzugsweise beim Gießen der Brandschutzplatte erzeugt, beispielsweise indem in einem entsprechenden Gießformwerkzeug eine aus intumeszierendem Material hergestellte Hülse positioniert wird, deren Außenumfang dann mit einer Gipsgussmasse umgossen wird. Alternativ kann die wenigstens eine Durchgangsöffnung der erfindungsgemäßen Brandschutzplatte beim Gießen der Brandschutzplatte auch in der Weise erzeugt werden, dass in einem entsprechenden Gießformwerkzeug ein zylindrischer oder hülsenförmiger Platzhalter aus Formsand, Wachs, Silikon, poliertem Metall oder dergleichen positioniert wird, dessen Außenumfang dann mit einer Gipsgussmasse umgossen wird. Der mindestens eine Platzhalter wird dann aus der abgebundenen Gipsgussmasse entfernt. Die Wandung der so erzeugten Durchgangsöffnung der Brandschutzplatte wird anschließend mit intumeszierenden Material beschichtet oder ausgekleidet. Das intumeszierendem Material kann dabei mit der Wandung der Durchgangsöffnung verklebt werden. Das als Beschichtung oder Auskleidung in die Durchgangsöffnung eingebrachte Material kann vor dem Einbringen in die Durchgangsöffnung bereits im Wesentlichen die Form einer Buchse oder Hülse aufweisen, wobei die Buchse oder Hülse vorzugsweise einen radial durchgängigen Axialschlitz aufweisen kann.

Das erfindungsgemäße plattenförmige Brandschutzelement ist vorzugsweise für den Einsatz im Bereich hinter einer sanitären Betätigungsplatte, beispielsweise einer WC- oder Urinal-Betätigungsplatte, ausgebildet und wird hierzu in einer vierkantrohrförmigen oder schachtförmigen Revisionsöffnung eines Wandeinbau-Spülkastens positioniert. Zur Betätigung eines in dem Wandeinbau-Spülkasten angeordneten Ablaufventils weist eine klassische Betätigungsplatte mindestens eine Betätigungstaste auf, die über eine Drückerstange (auch Betätigungsstange genannt) auf einen Hebelmechanismus zum Anheben des üblicherweise als Überlaufrohr ausgebildeten Ventilkörpers des Ablaufventils einwirkt. Hierzu muss das plattenförmige Brandschutzelement eine ein ausreichendes Spiel bietende Durchgangsöffnung (Durchdringung) zur Durchführung der beweglichen Drückerstange aufweisen. Ferner können in dem erfindungsgemäßen plattenförmigen Brandschutzelement eine oder mehrere zusätzliche Durchgangsöffnungen (Durchdringungen) eingebracht sein, insbesondere zur Durchführung von Befestigungsmitteln, beispielsweise Schraubbolzen zur Befestigung der Betätigungsplatte, und/oder zur Durchführung einer Elektro- oder Signalleitung für eine elektronische Betätigungsplatte.

Eine besondere Schwierigkeit besteht bei einem solchen Brandschutzelement bezüglich einer minimalen Wanddicke eines Installationsschachtes des Schachttyps A von nur 40 mm darin, dass im Brandfall im Installationsschacht über einen Zeitraum von 90 Minuten auf der dem Brand abgewandten Wandseite des Installationsschachtes an keiner Stelle eine Temperatur von 180°C überschritten werden darf, um eine Brandselbstauslösung durch zu hohe Materialtemperaturen zu vermeiden. Diese Schwierigkeit scheint sich durch Kombination marktgängiger Materialien nicht ohne weiteres bewältigten zu lassen. Zur Lösung dieses Problems wurde seitens der Patentanmelderin die Idee entwickelt, das plattenförmige Brandschutzelement im Gipsgussverfahren herzustellen. Im Rahmen von internen Brandschutzversuchen hat sich überraschenderweise gezeigt, dass besonders im Bereich der Durchgangsöffnungen (Durchdringungen) eine zu schnelle Austrocknung der gebundenen Restfeuchtigkeit im Plattenmaterial verhindert und somit ein zu schneller Temperaturanstieg auf der dem Brand abgewandten Seite des Brandschutzelements vermieden wird. Die Gipsgussmasse hat sich in den Bereichen der Durchdringungen als resistenter hinsichtlich der Wasseraustrocknung gezeigt als marktgängige, aufgebohrte bzw. nachträglich bearbeitete Brandschutzmaterialien, wie z.B. Brandschutzplatten aus Kalziumsilikat.

Des Weiteren wurde bei den Brandschutzversuchen seitens der Anmelderin festgestellt, dass im Brandfall bereits nach kurzer Zeit das Kunststoffmaterial des Spülkastens und des an der Revisionsöffnung angeordneten Revisionsschachtes (Vierkantrohrstutzens) weitgehend nicht mehr vorhanden oder weggeschmolzen ist und dass das expandierende Brandschutzmittel, welches die Öffnungswandung der jeweiligen Durchgangsöffnung bildet, die Durchgangsöffnung zuverlässig zur Brandseite hin verschließt.

Im Ergebnis wurde bei den Brandschutzversuchen festgestellt, dass das erfindungsgemäße aus Gipsgussmasse in Form gegossene, plattenförmige Brandschutzelement bereits bei einer eine Mindestwanddicke von 40 mm aufweisenden Schachtwand aus Gipskarton (Gipskartonfeuerschutzplatten) die Anforderungen gemäß Feuerwiderstandsklasse F90 erfüllt. Das erfindungsgemäße Brandschutzelement zeichnet sich durch relativ günstige Material- und Herstellungskosten aus. Darüber hinaus bietet das erfindungsgemäße Brandschutzelement den Vorteil, einen zuverlässigen Verschluss einer Durchgangsöffnung in unterschiedlich dicken Schachtwänden, die eine gängige Schachtwanddicke von ca. 40 mm, 45 mm und 50 mm aufweisen, gemäß Feuerwiderstandsklasse F90 mit nur einem Brandschutzprodukt, d.h. mit nur einer einzigen Ausführung des erfindungsgemäßen Brandschutzelements, realisieren zu können. Ferner ist das erfindungsgemäße Brandschutzelement sowohl mit kostengünstigen Betätigungsplatten aus Kunststoff als auch grundsätzlich mit hochwertigen Betätigungsplatten aus Metall, insbesondere solchen mit elektronischen Komponenten, kombinierbar.

Eine vorteilhafte Ausgestaltung der Erfindung sieht vor, dass die Brandschutzplatte auf ihrem Außenumfang mit dem oder einem im Brandfall expandierenden Brandschutzmittel versehen ist. Mit anderen Worten ist der Außenumfang der Brandschutzplatte vorzugsweise umlaufend mit im Brandfall expandierendem Brandschutzmittel versehen. Hierdurch wird eine schnelle und komfortable Montage der Brandschutzplatte in einem Revisionsschacht oder einer vierkantrohrförmigen Revisionsöffnung eines Wandeinbau-Spülkastens ermöglicht, wobei das auf dem Außenumfang der Brandschutzplatte aufgebrachte, beispielsweise aufgeklebte, im Brandfall expandierende Brandschutzmittel einen zuverlässigen Verschluss der umlaufenden Fuge zwischen der Brandschutzplatte und der sie umgebenden Wandung eines Revisionsschachtes oder dergleichen sicherstellt. Das auf dem Außenumfang der Brandschutzplatte umlaufend angeordnete Brandschutzmittel muss sich nicht über die gesamte Tiefe der Brandschutzplatte erstrecken; es kann beispielsweise auch genügen, wenn sich das umlaufend angeordnete Brandschutzmittel über einen Abschnitt der Tiefe der Brandschutzplatte erstreckt.

Eine weitere vorteilhafte Ausgestaltung der Erfindung ist dadurch gekennzeichnet, dass die Brandschutzplatte auf ihrer dem Montagegestell zugewandten Rückseite mit dem oder einem im Brandfall expandierenden Brandschutzmittel versehen ist. Diesbezüglich ist vorgesehen, dass das Bandschutzmittel die Rückseite der Brandschutzplatte vorzugsweise, mit Ausnahme der einen oder mehreren Durchgangsöffnungen und von einem oder mehreren optionalen Löchern zur Aufnahme von Befestigungsschrauben, im Wesentlichen vollflächig bedeckt. Mit anderen Worten ist die Rückseite der Brandschutzplatte vorzugsweise flächendeckend mit im Brandfall expandierendem Brandschutzmittel beschichtet. Hierdurch wird die Brandabschottung im Bereich des Revisionsschachtes bzw. im Bereich der Revisionsöffnung im Brandfall weiter verbessert. Insbesondere wird hierdurch die Wärmedämmeigenschaft der Brandschutzplatte gesteigert und damit verbessert.

Nach einer weiteren Ausgestaltung der Erfindung weist die Brandschutzplatte Löcher zur Aufnahme von Befestigungsschrauben auf. Hierdurch lässt sich die im Revisionsschacht oder dergleichen positionierte Brandschutzplatte einfach und schnell gegen Verrutschen sichern. Die Befestigungsschrauben können hierzu in eine die Revisionsöffnung des Wandeinbau-Spülkastens verschließende Spritzschutzplatte eingeschraubt werden. Die Löcher zur Aufnahme von Befestigungsschrauben haben dabei vorzugsweise einen Durchmesser, der kleiner als oder gleich dem Durchmesser von kreisrunden Köpfen der Befestigungsschrauben ist. Somit werden diese Löcher durch die darin aufgenommenen Befestigungsschrauben dicht verschlossen.

Eine weitere vorteilhafte Ausgestaltung der Erfindung sieht vor, dass die Brandschutzplatte am Übergang ihres Außenumfangs zu ihrer dem Montagegestell zugewandten Rückseite zu dem Außenumfang hin und zu der Rückseite hin offene Vertiefungen (Aussparungen) aufweist. Diese Vertiefungen dienen der funktionsgerechten Positionierung der Brandschutzplatte in dem betreffenden Revisionsschacht, der beispielsweise an einem die Revisionsöffnung des Spülkastens definierenden oder begrenzenden Rahmen montiert, vorzugsweise verrastet wird. Der Rahmen ist mit dem Spülkasten verbunden und hat an seinem unteren, horizontalen Rahmenabschnitt gegebenenfalls Vorsprünge zur Fixierung einer entnehmbaren, die Revisionsöffnung verschließenden Spritzschutzplatte, wobei diese Vorsprünge des Rahmens im eingesetzten Zustand der Brandschutzplatte in deren besagte Vertiefungen (Aussparungen) eingreifen. Die Vertiefungen erstrecken sich dabei nicht über die volle Tiefe (Dicke) der Brandschutzplatte, sondern enden mit Abstand von der Vorderseite der Brandschutzplatte. Die Vertiefungen sind voneinander beabstandet und vorzugsweise an der hinteren, unteren Kante der Brandschutzplatte ausgebildet.

Vorzugsweise weist die erfindungsgemäße Brandschutzplatte eine Plattendicke im Bereich von 28 mm bis 60 mm, insbesondere im Bereich von 32 mm bis 50 mm, besonders bevorzugt im Bereich von 34 mm bis 45 mm auf, wobei sich die Plattendicke ausschließlich auf die aus einer Gipsgussmasse in Form gegossene Brandschutzplatte bezieht. Durch eine entsprechende Plattendicke besitzt die aus Gipsguss in Form gegossene Brandschutzplatte gute Wärmedämmeigenschaften, die sicherstellen, dass bereits bei einer vergleichsweise geringen Wanddicke der vor dem Montagegestell angeordneten Beplankung aus Gipskarton von wenigstens 40 mm im Brandfall auf der dem Brand abgewandten Seite eine maximale Temperatur von 180°C über einen Zeitraum vom 90 Minuten nicht überschritten wird.

Eine weitere vorteilhafte Ausgestaltung der Erfindung ist dadurch gekennzeichnet, dass das im Brandfall expandierende Brandschutzmittel, welches zumindest einen Teil der Öffnungswandung der Durchgangsöffnung bildet, hülsenförmig ausgebildet ist, wobei sich das hülsenförmige Brandschutzmittel vorzugsweise von der Vorderseite bis zur Rückseite der aus Gipsgussmasse in Form gegossenen Brandschutzplatte erstreckt. Hierdurch lässt sich bei vergleichsweise geringem Materialverbrauch von im Brandfall expandierendem Brandschutzmittel ein zuverlässiger Verschluss der betreffenden Durchgangsöffnung im Brandfall sicherstellen.

Eine weitere vorteilhafte Ausgestaltung der Erfindung besteht darin, dass das Brandschutzmittel aus intumeszierendem Gewebe gebildet ist. Diese Ausgestaltung trägt zu einer zuverlässigen und kostengünstigen Verbindung des Brandschutzmittels mit der aus Gips gegossenen Brandschutzplatte bei. Die Verbindung kann dabei insbesondere als stoffschlüssige Verbindung ausgeführt sein, indem ein hülsenförmiges Brandschutzmittel aus intumeszierendem Gewebe mit einer Gipsgussmasse umgossen wird und/oder indem ein streifenförmiges Brandschutzmittel aus intumeszierendem Gewebe auf den Außenumfang der aus Gips gegossenen Brandschutzplatte vollumfänglich aufgebracht und dabei zumindest abschnittsweise mit der Brandschutzplatte verklebt wird.

Besonders vorteilhaft ist insbesondere eine Ausgestaltung der erfindungsgemäßen Sanitäreinrichtung, bei der das Montagegestell mit einem Spülwasserrohr und einem Ablaufrohr versehen ist, wobei die vor dem Montagegestell anzuordnende Wand (Beplankung) eine Öffnung zur Durchführung eines Spülwasserrohrstutzens und unterhalb dieser Öffnung eine Öffnung zur Durchführung eines Ablaufrohrstutzens aufweist, und mit buchsen- oder bandförmigem Brandschutzmitteln aus intumeszierendem Material, die zur Anordnung in der Öffnung zur Durchführung des Spülwasserrohrstutzens und zur Anordnung in der Öffnung zur Durchführung des Ablaufrohrstutzens bestimmt sind. Hierdurch lässt sich auf einfache und kostengünstige Weise sicherstellen, dass im Brandfall auch die Öffnung zur Durchführung des Spülwasserrohrstutzens sowie die Öffnung zur Durchführung des Ablaufrohrstutzens zuverlässig verschlossen werden, um brandschutztechnische Anforderungen entsprechend Feuerwiderstandsklasse F90 zu erfüllen.

Die oben angegebenen, der Erfindung zugrunde liegenden Aufgaben werden zumindest teilweise insbesondere durch ein Brandschutz-Set für eine Sanitäreinrichtung der eingangs genannten Art gelöst, welches Brandschutz-Set ein Brandschutzelement umfasst, das aus einer aus Gipsgussmasse in Form gegossenen Brandschutzplatte gebildet ist, wobei die Brandschutzplatte wenigstens eine Durchgangsöffnung aufweist, deren Öffnungswandung zumindest teilweise aus dem im Brandfall expandierenden Brandschutzmittel gebildet ist, und zudem wenigstens ein bandförmiges Brandschutzmittel aus intumeszierendem Material umfasst, das zum Umwickeln eines Spülwasserrohrstutzens und/oder zum Umwickeln eines Ablaufrohrstutzens bestimmt ist. Das wenigstens eine bandförmige Brandschutzmittel kann hierzu erforderlichenfalls in zwei Teilstücke passender Länge geteilt werden. Die Brandschutzplatte des Brandschutz-Sets ist dabei vorzugsweise entsprechend mindestens einer der oben angegebenen Ausgestaltungen der Brandschutzplatte ausgeführt. Das erfindungsgemäße Brandschutz-Set zeichnet sich somit im Wesentlichen durch die gleichen Vorteile aus, die oben bezüglich der erfindungsgemäßen Sanitäreinrichtung dargelegt sind.

Nach einer weiteren Ausgestaltung umfasst das Brandschutz-Set einen oder mehrere Klebestreifen zur Verbindung der bandförmigen Brandschutzmittel mit dem Spülrohrstutzen bzw. dem Ablaufrohrstutzen der Sanitäreinrichtung. Bevorzugt weisen die bandförmigen Brandschutzmittel für ein mehrfaches Umwickeln des Spülwasserrohrstutzens oder des Ablaufrohrstutzens eine Länge von wenigstens 60 cm, vorzugsweise von wenigstens 120 cm auf. Hierdurch lässt schnell und kostengünstig ein im Brandfall zuverlässig wirksamer Verschluss der Öffnung zur Durchführung des Spülwasserrohrstutzens sowie der Öffnung zur Durchführung des Ablaufrohrstutzens realisieren.

Des Weiteren ist es vorteilhaft, wenn das wenigstens eine bandförmige oder die bandförmigen Brandschutzmittel eine Breite im Bereich von 30 mm bis 60 mm, vorzugsweise im Bereich von 35 mm bis 55 mm, besonders bevorzugt im Bereich von 40 mm bis 50 mm aufweisen. Auch diese Ausgestaltung trägt zu einem zuverlässigen Verschluss der betreffenden Öffnungen im Brandfall bei.

Nachfolgend wird die Erfindung anhand einer Ausführungsbeispiele darstellenden Zeichnung näher erläutert. Es zeigen:
- Fig. 1: eine Vorderansicht auf einen Wandabschnitt eines Gebäudegeschosses mit einem Installationsschacht vom Schachttyp A mit Sanitäreinrichtungen umfassend zwei in dem Schacht, hinter einer vorderen Trennwand aus Gipskarton angeordneten Montagegestellen, jeweils mit einem Unterputz-Spülkasten, zum wandseitigen Anschluss von zwei WC-Körpern;
- Fig. 2: einen oberen Abschnitt eines der hinter der vorderen Schacht-Trennwand angeordneten Montagegestelle mit Unterputz-Spülkasten aus Fig. 1, in einer vertikalen Schnittansicht, wobei ein an einer Revisionsöffnung des Spülkastens angeordneter Revisionsschacht mit teilweise weggebrochenen Seitenwand gezeigt ist;
- Fig. 3: ein plattenförmiges Brandschutzelement zum Einsatz in den Revisionsschacht aus Fig. 2, in einer perspektivischen Rückansicht;
- Fig. 4: einen Abschnitt der vorderen Schacht-Trennwand aus Fig. 1 im Bereich einer Durchgangsöffnung zur Durchführung eines Spülwasserrohrstutzens, in einer vertikalen Schnittansicht;
- Fig. 5: einen Abschnitt der vorderen Schacht-Trennwand aus Fig. 1 im Bereich einer Durchgangsöffnung zur Durchführung eines Ablaufrohrstutzens, in einer vertikalen Schnittansicht;
- Fig. 6: ein Brandschutz-Set für eine Sanitäreinrichtung umfassend ein Brandschutzelement, das aus einer aus Gipsgussmasse in Form gegossenen Brandschutzplatte gebildet ist, wobei die Brandschutzplatte mehrere Durchgangsöffnungen aufweist, deren Öffnungswandungen zumindest teilweise aus einem im Brandfall expandierenden Brandschutzmittel gebildet sind, zwei bandförmige Brandschutzmittel aus intumeszierendem Material, die zum Umwickeln eines Spülwasserrohrstutzens und eines Ablaufrohrstutzens bestimmt sind, und zwei Befestigungsschrauben; in einer perspektivischen Darstellung;
- Fig. 7: die Brandschutzplatte aus Fig. 6 in einer perspektivischen Rückansicht; und
- Fig. 8: die Brandschutzplatte aus Fig. 6 in einer Seitenansicht.

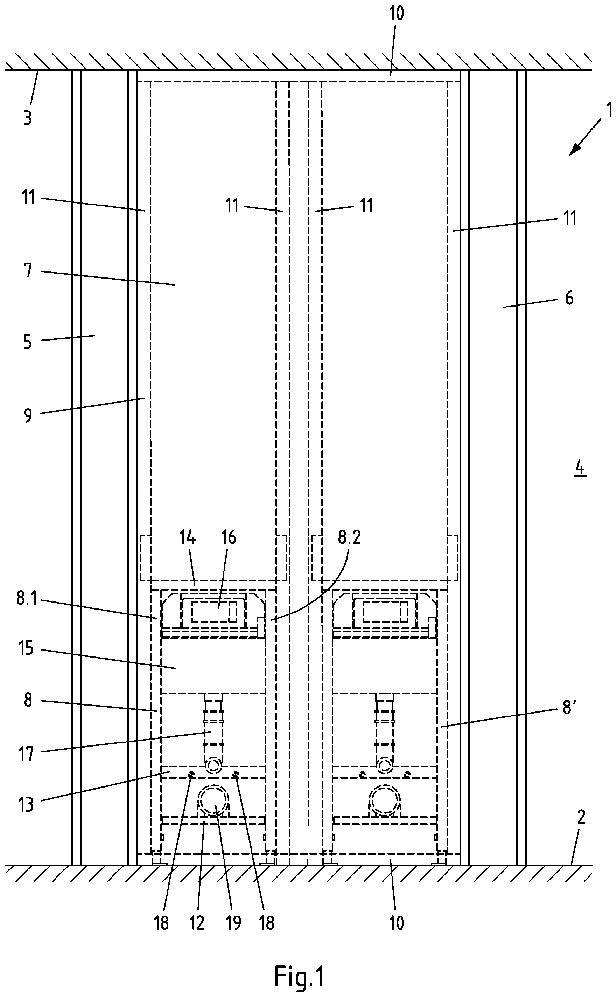

In Fig. 1 ist in Vorderansicht ein Geschossabschnitt eines Installationsschachtes 1 dargestellt, der durchgängig, d.h. ohne brandabschnittsbildende Abschottung in der jeweiligen Geschossdecke 2, 3, ausgeführt ist. In dem Installationsschacht 1 sind (hier nicht gezeigte) Trinkwasser- und Abwasserleitungen angeordnet, die sich über zwei oder mehrere Geschosse des betreffenden Gebäudes erstrecken. Der Installationsschacht 1 ist beispielsweise durch eine hintere Gebäudewand 4 und zwei mit der Gebäudewand 4 dicht verbundene, rechtwinklig zu der Gebäudewand 4 und parallel zueinander verlaufende Seitenwände 5, 6 begrenzt. Die hintere Gebäudewand 4 und die Seitenwände 5, 6 sind als Massivwände ausgeführt. An seiner dem Gebäuderaum zugewandten Vorderseite ist der Installationsschacht 1 durch eine Trennwand 7 geschlossen.

Fig. 1 zeigt eine Versuchsanordnung, bei der hinter der vorderen Trennwand 7 des Installationsschachts 1 zu Versuchszwecken zwei WC-Montagestelle 8, 8' nebeneinander montiert waren.

Die Trennwand 7 ist als Trockenbau-Wand ausgeführt. Hierzu wird nahe dem vorderen Ende des Installationsschachtes 1 ein umlaufender Rahmen 9 aus Stahlblechprofilen montiert. Die Basis des Rahmens 9 bzw. der Trennwand 7 bilden vorzugsweise U-Profile 10, die horizontal an Boden und Decke montiert werden.

Darin werden dann vorzugsweise C-Profile 11 montiert, welche in dem Rahmen 9 (Trockenbau-Ständerwerk) die vertikalen Streben bilden.

In den Rahmen 9 wird ein Montagegestell 8 für einen Sanitärkörper, beispielsweise für einen WC-Körper eingesetzt und mit dem Rahmen 9 fest verbunden, vorzugsweise verschraubt. Das Montagegestell 8 ist aus vertikalen Streben 8.1, 8.2 und mit diesen fest verbundenen horizontalen Traversen 12, 13, 14 gebildet. Die Streben 8.1, 8.2 sowie die Traversen 12, 13, 14 sind aus Metallprofilen gefertigt. In dem Montagegestell 8 ist ein Einbau-Spülkasten (Unterputz-Spülkasten) 15 gehalten, der in seinem oberen Bereich eine Revisionsöffnung 16 aufweist. An der Unterseite des Spülkastens 15 ist ein bogenförmiges Spülwasserzulaufrohr 17 angeschlossen, dessen unteres, muffenförmiges Ende an der mittleren Traverse 13 des Montagegestells befestigt ist. Des Weiteren ist die mittlere Traverse 13 mit Befestigungslöchern oder Gewindehülsen 18 zur Aufnahme von Gewindestangen (nicht gezeigt) versehen, die der Anbindung des WC-Körpers an das Montagegestell 8 dienen. Zudem ist das Montagegestell 8 mit einem bogenförmigen Abwasserrohr 19 versehen, dessen oberes muffenförmiges Ende vorzugsweise an der unteren Traverse 12 des Montagegestell 8 befestigt ist.

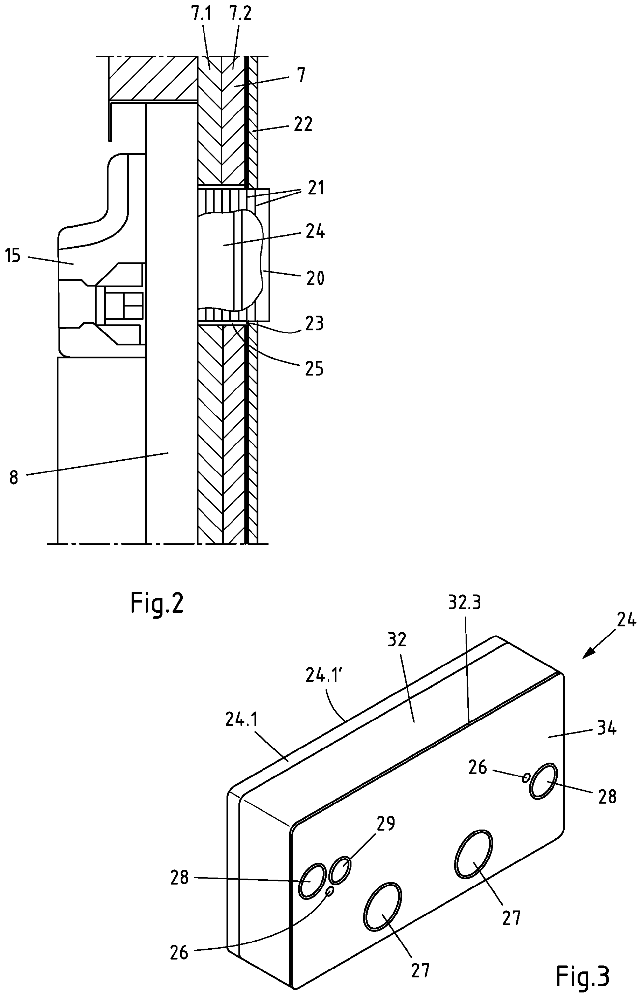

Der aus Stahlblechprofilen gebildete Rahmen 9 wird vorderseitig, mit Ausnahme der schließlich durch eine Betätigungsplatte (nicht gezeigt) sichtverdeckten Revisionsöffnung des Spülkastens 15 und der Durchgangsöffnungen für einen Spülwasserrohrstutzen 40 und einen Abwasserrohrstutzen 50, vollflächig mit Gipskartonplatten, vorzugsweise Gipskartonfeuerschutzplatten 7.1, 7.2 beplankt, die einer Feuerwiderstandsklasse von F90 oder höher entsprechen (vgl. Fig. 2, 4 und 5). Die Dicke der Beplankung der Trennwand 7 beträgt beispielsweise wenigstens 40 mm. Die Beplankung ist vorzugsweise zwei- oder mehrlagig ausgeführt, wobei die Dicke der jeweiligen Gipskartonplatte 7.1, 7.2 bzw. Lage beispielsweise wenigstens 20 mm beträgt. Die jeweilige Plattenlage ist dabei vorzugsweise aus im Stumpfstoß aneinander gesetzten Gipskartonfeuerschutzplatten 7.1, 7.2 gebildet, wobei die Gipskartonfeuerschutzplatten der zweiten oder nächsten Lage so dimensioniert und angeordnet werden, dass die von ihnen definierten Stoßfugen versetzt zu den Stoßfugen der Gipskartonfeuerschutzplatten der ersten oder vorherigen Lage verlaufen.

Der Spülkasten 15 ist in dem Montagegestell 8 vorzugsweise so angeordnet, dass seine Vorderseite nicht über die Vorderseite des Montagegestells 8 vorsteht. Beispielsweise liegt die Vorderseite des Spülkastens 15 horizontal betrachtet etwas tiefer als die Vorderseite der Streben 8.1, 8.2 und Traversen 12, 13, 14 des Montagegestells 8.

An der Revisionsöffnung 16 des Spülkastens 15 ist ein mit dem Spülkasten lösbar verbundener Revisionsschacht 20 angeordnet (vgl. Fig. 2). Der Revisionsschacht 20 erstreckt sich horizontal in Richtung des betreffenden Gebäuderaums. Der vorzugsweise aus Kunststoff hergestellte Revisionsschacht 20 ist kürzbar und weist hierzu mehrere auf seinem Außenumfang umlaufende, zueinander parallele Nuten 21 auf, die als Führung für ein Schneidwerkzeug dienen. Der Revisionsschacht 20 ist in seinem ursprünglichen Lieferzustand so bemessen, dass er eine größere Tiefe besitzt als die Dicke der Trennwand 7 des Installationsschachtes 1 einschließlich eines auf der Trennwand 7 angebrachten Wandbelages 22, z.B. Fliesenbelages. Der Revisionsschacht 20 kann dann so weit gekürzt werden, dass er nahezu flächenbündig zu der Außenfläche des Wandbelages 22 endet. In der aus Gipskartonplatten, vorzugsweise Gipskartonfeuerschutzplatten 7.1, 7.2 gebildeten Trennwand 7 wird eine Durchgangsöffnung 23 ausgebildet, die im montierten Zustand der Trennwand 7 von dem Revisionsschacht 20 durchdrungen wird. Ein zwischen der Laibung der Durchgangsöffnung 23 und dem Außenumfang des Revisionsschachts 20 zunächst vorhandener Spalt 25 wird vorzugsweise mit einer Abdichtmasse, z.B. Gipsmasse, rauchdicht verschlossen.

In den Revisionsschacht 20 wird ein plattenförmiges Brandschutzelement 24 eingesetzt. Das Brandschutzelement 24 ist aus einer aus Gipsgussmasse in Form gegossenen Brandschutzplatte 24.1 gebildet. Die Brandschutzplatte 24.1 weist wenigstens eine Durchgangsöffnung, in den dargestellten Ausführungsbeispielen allerdings vorzugsweise mehrere Durchgangsöffnungen 27, 28, 29 auf, die der Hindurchführung eines oder mehrere Betätigungs- und/oder Befestigungselemente einer dem Spülkasten 15 zugeordneten WC-Betätigungsplatte (nicht gezeigt) von der Vorderseite zu der Rückseite der Brandschutzplatte 24.1 dienen.

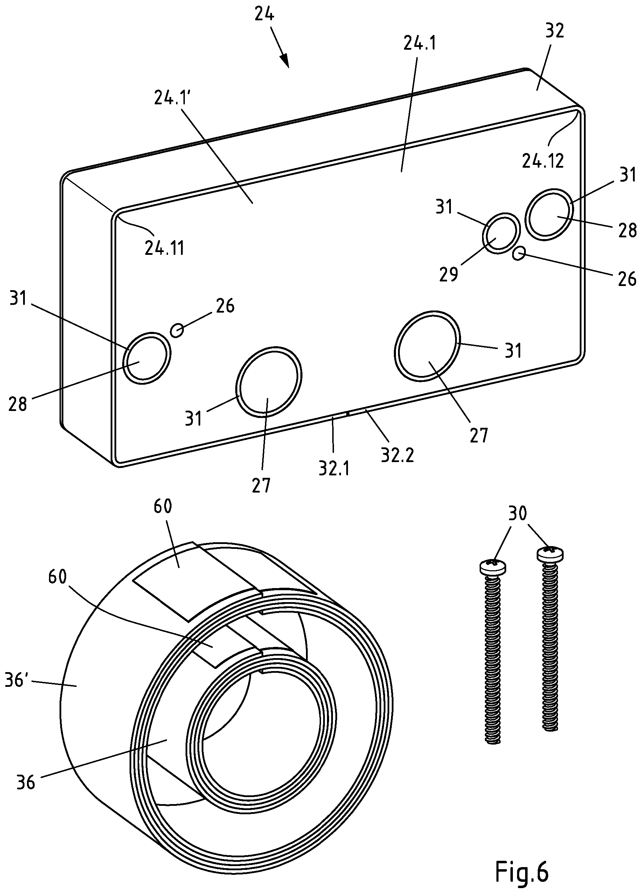

Die in der Zeichnung dargestellte Brandschutzplatte 24.1 weist beispielsweise zwei Durchgangsöffnungen 16 mit vergleichsweise kleinem Durchmesser auf, die der Anordnung von Schrauben 30 dienen, mittels denen die Brandschutzplatte 24.1 am Spülkasten 15, beispielsweise an einer in die Revisionsöffnung 16 des Spülkastens 15 formschlüssig eingesetzten Spritzschutzplatte (nicht gezeigt), gegen Verrutschen gesichert wird. Der Durchmesser der Durchgangsöffnungen 26 kann beispielsweise ca. 5 mm betragen. Die Köpfe der Schrauben 30 besitzen vorzugsweise einen größeren Durchmesser als die ihnen zugeordneten Durchgangsöffnungen 26 (vgl. Fig. 6).

Des Weiteren hat die Brandschutzplatte 24.1 auf gleicher Höhe ausgebildete Durchgangsöffnungen 27, die vorzugsweise einen kreisrunden Lochquerschnitt aufweisen. Diese Durchgangsöffnungen 27 dienen als Durchführung für Betätigungsstangen (Drückerbolzen), welche die Bewegung von Betätigungstasten der Betätigungsplatte auf einen im Spülkasten 15 angeordneten Hebelmechanismus übertragen, mittels dem ein im Spülkasten 15 angeordnetes Ablaufventil betätigt werden kann. Die Betätigungsstangen durchdringen die Durchgangsöffnungen mit radialem Spiel. Der Durchmesser der Durchgangsöffnungen 27 kann beispielsweise im Bereich von ca. 20 mm bis ca. 23 mm liegen.

Ferner weist die Brandschutzplatte 24.1 optional zwei in unterschiedlicher Höhe ausgebildete Durchgangsöffnungen 28 auf, die ebenfalls vorzugsweise einen kreisrunden Lochquerschnitt haben, und zudem eine nah angrenzende, kreisrunde Durchgangsöffnung 29 zur Hindurchführung eines Elektro- bzw. Signalkabels für eine Betätigungsplatte (nicht gezeigt), die als elektronische Betätigungsplatte ausgeführt ist und beispielsweise kapazitive Tastsensoren und/oder einen Näherungssensor zur Auslösung eines Spülvorgangs aufweist. Die Durchgangsöffnungen 28 dienen als Durchführungen für Befestigungsbolzen der Betätigungsplatte. Der Durchmesser der Durchgangsöffnungen 28 bzw. 29 kann beispielsweise im Bereich von ca. 13 mm bis ca. 18 mm bzw. im Bereich von ca. 11 mm bis ca. 16 mm liegen.

Jede der Durchgangsöffnungen 27, 28, 29 (ausgenommen die Durchgangsöffnungen 26 für die Schrauben 30) ist mit einem hülsenförmigen Brandschutzmittel 31 ausgestattet, das im Brandfall expandiert. Das Brandschutzmittel 31 ist vorzugsweise aus intumeszierendem Gewebe gebildet. Die hülsenförmigen Brandschutzmittel 31 können auch als intumeszierende Hülsen oder ggf. als intumeszierende Brandschutzgewebehülsen bezeichnet werden. Die oben als Beispiele angegebenen Werte für den Durchmesser der mit intumeszierendem Brandschutzmittel 31 versehenen Durchgangsöffnungen 27, 28, 29 beziehen sich auf den Innendurchmesser der durch das Brandschutzmittel 31 gebildeten Öffnungswandung. Die Wanddicke des jeweiligen hülsenförmigen Brandschutzmittels 31 liegt vorzugsweise im Bereich von ca. 1,4 mm bis ca. 1,8 mm und beträgt beispielsweise ca. 1,6 mm. Das hülsenförmige Brandschutzmittel 31 erstreckt sich vorzugsweise über die gesamte Axiallänge der betreffenden Durchgangsöffnung 27, 28, 29.

Insbesondere in den Figuren 3 und 6 ist gezeigt, dass die Brandschutzplatte 24.1 auch außenumfangsseitig mit intumeszierendem Material 32 versehen ist, das im Brandfall expandiert. Die seitlichen Kanten 24.11, 24.12 des Außenumfangs des aus Gipsguss gegossenen quader- oder plattenförmigen Kerns 24.1' der Brandschutzplatte 24.1 sind abgerundet. Das im Brandfall expandierende Material ist bandförmig ausgeführt und über den vollen Umfang des Kerns 24.1` der Brandschutzplatte 24.1 appliziert, so dass die Enden 32.1, 32.2 des bandförmigen Materials 32 aneinanderstoßen oder einen geringen Spalt 33 bilden, wobei sich der Spalt 33 jedoch im Brandfall durch die Expansion des Materials 32 schließt. Die Breite des bandförmigen Materials 32 kann etwas kleiner sein als die Dicke (Tiefe) des aus Gips in Form gegossenen Kerns 24.1` der Brandschutzplatte 24.1. Das bandförmige Material 32 wird vorzugsweise so auf den Umfang des Kerns 24.1` appliziert, dass es mit einem (32.3) seiner beiden Längsränder unmittelbar an die Rückseite des Kerns 24.1' angrenzt (vgl. Fig. 3).

Des Weiteren ist in den Figuren 3, 7 und 8 gezeigt, dass intumeszierendes Material 34 vorzugsweise auch auf der Rückseite des Gipsguss-Kerns 24.1` der Brandschutzplatte 24.1 appliziert sein kann. Besonders bevorzugt ist das intumeszierende Material 34, das im Brandfall expandiert, im Wesentlichen vollflächig auf die Rückseite des quader- oder plattenförmigen Gipsguss-Kerns 24.1' appliziert; ausgenommen sind dabei jedoch die Durchgangsöffnungen 26, 27, 28, 29 der Brandschutzplatte 24.1. Das auf der Rückseite applizierte intumeszierende Material 34 sowie das außenumfangsseitig applizierte intumeszierende Material 32 haben im Normalzustand (Nicht-Brandfall) jeweils eine Dicke, die im Bereich von ca. 1,4 mm bis ca. 1,8 mm liegt, und beispielsweise ca. 1,6 mm beträgt.

Die Dicke des quader- oder plattenförmigen Gipsguss-Kerns 24.1' der Brandschutzplatte 24.1 liegt beispielsweise im Bereich von ca. 33 mm bis ca. 37 mm, und beträgt beispielsweise ca. 35 mm.

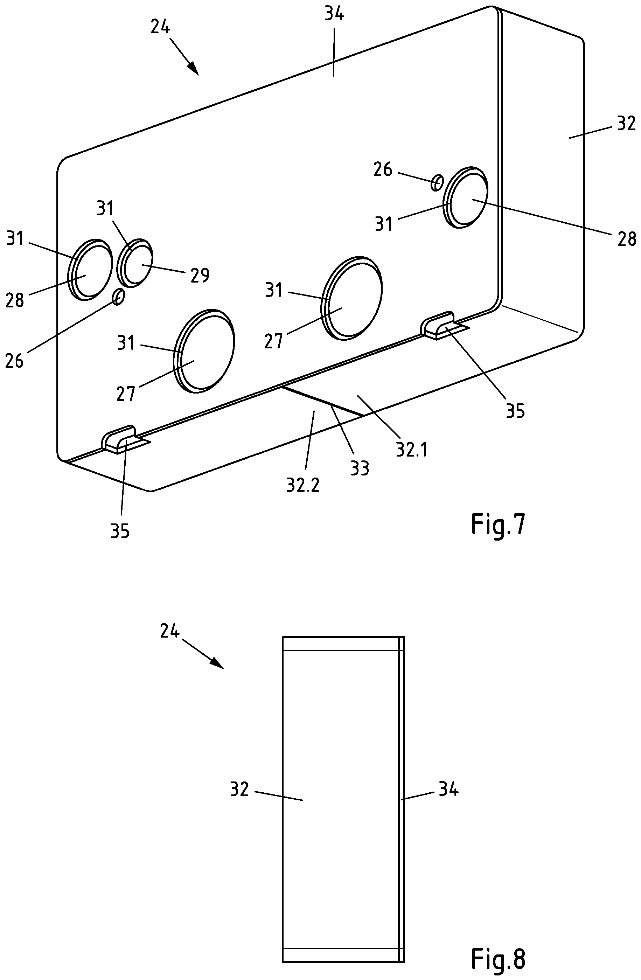

Ferner ist in Fig. 7 gezeigt, dass die Brandschutzplatte 24.1 am Übergang ihres Außenumfangs zu ihrer Rückseite Vertiefungen (Aussparungen) 35 aufweist, die zu dem Außenumfang und zu der Rückseite hin offen sind. Die Vertiefungen 35 dienen einer möglichst tiefen bzw. optimierten Positionierung der Brandschutzplatte 24.1 im Revisionsschacht 20. Im eingesetzten Zustand der Brandschutzplatte 24.1 greifen Vorsprünge eines mit dem Spülkasten 15 verbunden Rahmens (nicht gezeigt), der die Revisionsöffnung 16 des Spülkastens begrenzt, in die Vertiefungen (Aussparungen) 35 der Brandschutzplatte 24.1. Die Vertiefungen 35 sind an der Unterseite des Außenumfangs der Brandschutzplatte 24.1 ausgebildet, wobei dort den Abmessungen der Vertiefungen 35 entsprechende Teilstücke aus dem intumeszierenden Material 32, 34 ausgeschnitten und entfernt sind. Die jeweilige Vertiefung 35 hat beispielsweise eine Breite im Bereich von ca. 12 mm bis ca. 16 mm, eine Höhe im Bereich von ca. 2 mm bis 5 mm und eine Tiefe im Bereich von ca. 4 mm bis 7 mm.

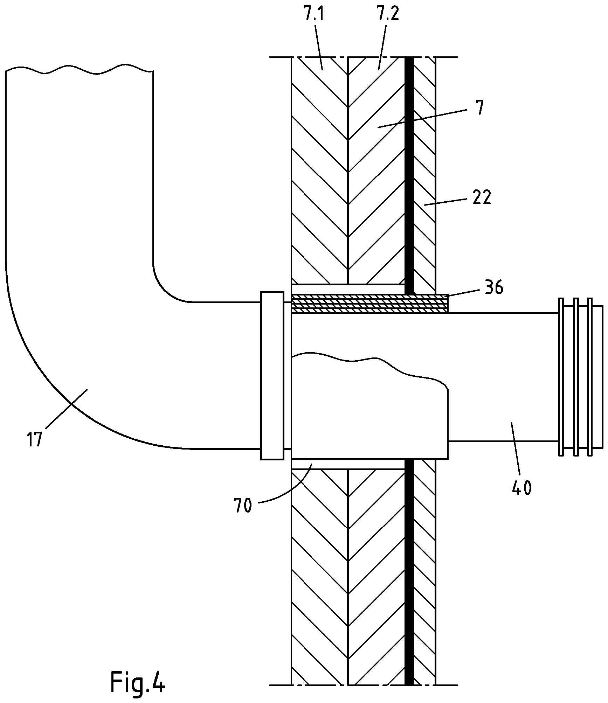

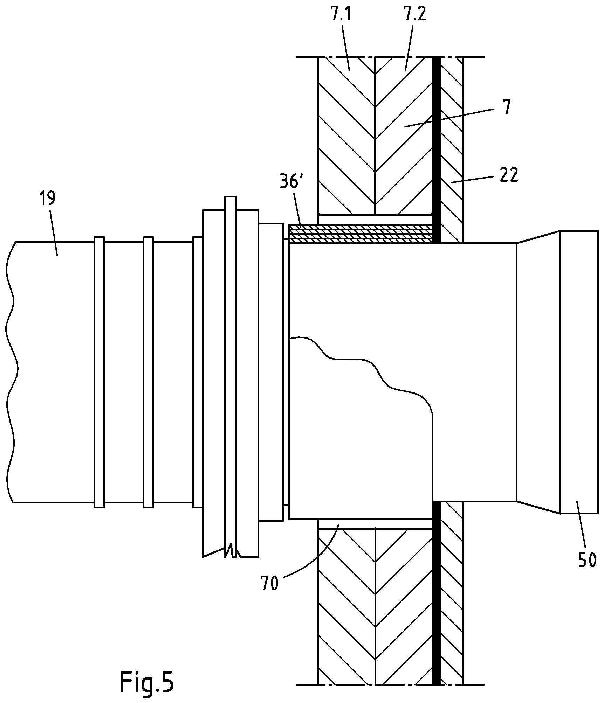

Die Brandschutzplatte 24.1 ist eine Komponente eines Brandschutz-Sets für eine Sanitäreinrichtung, die, wie oben beschrieben, ein Montagegestell 8 für den wandseitigen Anschluss eines WC- oder Urinal-Körpers aufweist. Das Brandschutz-Set umfasst zudem bandförmige Brandschutzmittel 36, 36' aus intumeszierendem Material, die zum Umwickeln, vorzugsweise mehrfachen Umwickeln eines Spülwasserrohrstutzens 40 und eines Ablaufrohrstutzens 50 bestimmt sind (vgl. Figuren 4 und 5). Der Spülwasserrohrstutzen 40 hat in der ihm zugeordneten Durchgangsöffnung der Trennwand 7 einen Außendurchmesser von ca. 45 mm, während der Ablaufrohrstutzen 50 in der ihm zugeordneten Durchgangsöffnung der Trennwand 7 einen Außendurchmesser von ca. 90 mm aufweist.

Die bandförmigen Brandschutzmittel 36, 36' sind vorzugsweise passend zugeschnitten. Es liegt jedoch auch im Rahmen der vorliegenden Erfindung, dass das Brandschutz-Set außer der Brandschutzplatte 24.1 und möglicherweise Hilfsmaterial, wie z.B. Klebestreifen 60, lediglich eine einzelne Rolle eines entsprechenden bandförmigen Brandschutzmittels 36, 36' aus intumeszierendem Material aufweist. Die bandförmigen Brandschutzmittel 36, 36' können in passender Länge von der Rolle abgewickelt und durch Abschneiden voneinander getrennt werden.

Das bandförmige Brandschutzmittel 36 für ein mehrfaches, beispielsweise vierfaches Umwickeln des Spülwasserrohrstutzens 40 weist vorzugsweise eine Länge von wenigstens 60 cm auf, während das bandförmige Brandschutzmittel 36' für ein mehrfaches, beispielsweise vierfaches Umwickeln des Ablaufrohrstutzens 50 vorzugsweise eine Länge von wenigstens 120 cm aufweist. Die Breite der bandförmigen Brandschutzmittel 36, 36' liegt beispielsweise im Bereich von 30 mm bis 60 mm, vorzugsweise im Bereich von 35 mm bis 55 mm, besonders bevorzugt im Bereich von 40 mm bis 50 mm.

Des Weiteren umfasst das Brandschutz-Set vorzugsweise einen oder mehrere Klebestreifen 60 zur Verbindung der bandförmigen Brandschutzmittel 36, 36' mit dem Spülwasserrohrstutzen 40 und dem Ablaufrohrstutzen 50. Ein zwischen der Laibung der Durchgangsöffnung und dem Außenumfang des bandförmigen Brandschutzmittels 36, 36' zunächst vorhandener Spalt 70 wird vorzugsweise mit einer Abdichtmasse, z.B. Gipsmasse, rauchdicht verschlossen.

Im Brandfall ist bereits nach kurzer Zeit das Kunststoffmaterial des Spülwasserrohrstutzens 40 sowie des Ablaufrohrstutzens 50 verbrannt und somit nicht mehr vorhanden. Das intumeszierende Material der bandförmigen Brandschutzmittel 36, 36' verschließt in diesem Fall zuverlässig die jeweilige Durchgangsöffnung der Trennwand 7.

## Patentansprüche

1. Sanitäreinrichtung mit einem plattenförmigen Brandschutzelement (24), welche Sanitäreinrichtung ein Montagegestell (8) für einen Sanitärkörper und eine vor dem Montagegestell (8) anzuordnende Wand mit wenigstens einer mit dem Brandschutzelement zu verschließenden Öffnung aufweist, wobei das Brandschutzelement (24) mit wenigstens einem Brandschutzmittel (31, 32, 34) versehen ist, das im Brandfall expandiert, **dadurch gekennzeichnet, dass** das Brandschutzelement (24) aus einer aus Gipsgussmasse in Form gegossenen Brandschutzplatte (24.1) gebildet ist, wobei die Brandschutzplatte (24.1) wenigstens eine Durchgangsöffnung (27, 28, 29) aufweist, deren Öffnungswandung zumindest teilweise aus dem im Brandfall expandierenden Brandschutzmittel (31) gebildet ist.

2. Sanitäreinrichtung nach Anspruch 1, **dadurch gekennzeichnet, dass** die Brandschutzplatte (24.1) auf ihrem Außenumfang mit dem oder einem im Brandfall expandierenden Brandschutzmittel (32) versehen ist.

3. Sanitäreinrichtung nach Anspruch 1 oder 2, **dadurch gekennzeichnet, dass** die Brandschutzplatte (24.1) auf ihrer dem Montagegestell (8) zugewandten Rückseite mit dem oder einem im Brandfall expandierenden Brandschutzmittel (34) versehen ist.

4. Sanitäreinrichtung nach Anspruch 3, **dadurch gekennzeichnet, dass** das Bandschutzmittel (34) die Rückseite der Brandschutzplatte (24.1) mit Ausnahme der einen oder mehreren Durchgangsöffnungen (27, 28, 29) und von einem oder mehreren optionalen Löchern (26) zur Aufnahme von Befestigungsschrauben im Wesentlichen vollflächig bedeckt.

5. Sanitäreinrichtung nach einem der Ansprüche 1 bis 4, **dadurch gekennzeichnet, dass** die Brandschutzplatte (24.1) Löcher (26) zur Aufnahme von Befestigungsschrauben (30) aufweist.

6. Sanitäreinrichtung nach einem der Ansprüche 1 bis 5, **dadurch gekennzeichnet, dass** die Brandschutzplatte (24.1) am Übergang ihres Außenumfangs zu ihrer dem Montagegestell (8) zugewandten Rückseite zu dem Außenumfang hin und zu der Rückseite hin offene Vertiefungen (35) aufweist.

7. Sanitäreinrichtung nach einem der Ansprüche 1 bis 6, **dadurch gekennzeichnet, dass** die Brandschutzplatte (24.1) eine Plattendicke im Bereich von 28 mm bis 60 mm, vorzugsweise im Bereich von 32 mm bis 50 mm, besonders bevorzugt im Bereich von 34 mm bis 45 mm aufweist, wobei sich die Plattendicke ausschließlich auf die aus Gipsgussmasse in Form gegossene Brandschutzplatte (24.1) bezieht.

8. Sanitäreinrichtung nach einem der Ansprüche 1 bis 7, **dadurch gekennzeichnet, dass** das Brandschutzmittel (31), welches zumindest einen Teil der Öffnungswandung der Durchgangsöffnung (27, 28, 29) bildet, hülsenförmig ausgebildet ist, wobei sich das hülsenförmige Brandschutzmittel (31) von der Vorderseite bis zur Rückseite der aus Gipsgussmasse in Form gegossenen Brandschutzplatte (24.1) erstreckt.

9. Sanitäreinrichtung nach einem der Ansprüche 1 bis 8, **dadurch gekennzeichnet, dass** das Brandschutzmittel (31, 32, 34) aus intumeszierendem Gewebe gebildet ist.

10. Sanitäreinrichtung nach einem der Ansprüche 1 bis 9, **dadurch gekennzeichnet, dass** das Montagegestell (8) mit einem Spülwasserrohr (17) und einem Ablaufrohr (19) versehen ist, wobei die vor dem Montagegestell (8) anzuordnende Wand eine Öffnung zur Durchführung eines Spülwasserrohrstutzens (40) und unterhalb dieser Öffnung eine Öffnung zur Durchführung eines Ablaufrohrstutzens (50) aufweist, und mit buchsenförmigem oder bandförmigem Brandschutzmitteln (36, 36') aus intumeszierendem Material, die zur Anordnung in der Öffnung zur Durchführung des Spülwasserrohrstutzens (40) und zur Anordnung in der Öffnung zur Durchführung des Ablaufrohrstutzens (50) bestimmt sind.

11. Brandschutz-Set für eine Sanitäreinrichtung nach einem der Ansprüche 1 bis 10, umfassend ein Brandschutzelement (24), das aus einer aus Gipsgussmasse in Form gegossenen Brandschutzplatte (24.1) gebildet ist, wobei die Brandschutzplatte (24.1) wenigstens eine Durchgangsöffnung (27, 28, 29) aufweist, deren Öffnungswandung zumindest teilweise aus dem im Brandfall expandierenden Brandschutzmittel (31) gebildet ist, und wenigstens ein bandförmiges Brandschutzmittel (36, 36') aus intumeszierendem Material, das zum Umwickeln eines Spülwasserrohrstutzens (40) und/oder zum Umwickeln eines Ablaufrohrstutzens (50) bestimmt ist.

12. Brandschutz-Set nach Anspruch 11, **dadurch gekennzeichnet, dass** die Brandschutzplatte (24.1) gemäß der in einem der Ansprüche 2 bis 9 definierten Brandschutzplatte (24.1) ausgeführt ist.

13. Brandschutz-Set nach Anspruch 11 oder 12, des Weiteren umfassend einen oder mehrere Klebestreifen (60) zur Verbindung der bandförmigen Brandschutzmittel (36, 36') mit dem Spülwasserrohrstutzen (40) und dem Ablaufrohrstutzen (50).

14. Brandschutz-Set nach einem der Ansprüche 11 bis 13, **dadurch gekennzeichnet, dass** die bandförmigen Brandschutzmittel (36, 36') für ein mehrfaches Umwickeln des Spülwasserrohrstutzens (40) oder des Ablaufrohrstutzens (50) eine Länge von wenigstens 60 cm, vorzugsweise von wenigstens 120 cm aufweisen.

15. Brandschutz-Set nach einem der Ansprüche 11 bis 14, **dadurch gekennzeichnet, dass** das wenigstens eine bandförmige Brandschutzmittel (36, 36') eine Breite im Bereich von 30 mm bis 60 mm, vorzugsweise im Bereich von 35 mm bis 55 mm, besonders bevorzugt im Bereich von 40 mm bis 50 mm aufweist.
